# FASCICULE DE BREVET EUROPEEN

(11) **EP 1 746 783 B1**
(45) Date de publication et mention de la délivrance du brevet: **16.09.2015**
(21) Numéro de dépôt: 06291036.9
(22) Date de dépôt: 23.06.2006
(51) Int. Cl.: H04L 12/403, B60R 16/02

(54) **Procédé et dispositif de communication pour véhicules automobiles**
Kommunikationsverfahren und Kommunikationsanordnung für Kraftfahrzeug
Communication method and system for motor vehicles

(30) Priorité: 19.07.2005 FR 0507636
(43) Date de publication de la demande: 24.01.2007
(73) Titulaire: VALEO VISION, 93012 Bobigny Cedex (FR)
(72) Inventeur: Flandre, Loïc, 94100 Saint Maur des Fossée (FR); Sadoux, Grégoire, 92600 Asnieres Sur Seine (FR)

(56) Documents cités:
- DE-A1- 10 254 738
- US-A1- 2003 070 019
- US-A1- 2004 202 201
- RYLANDER & WALLIN: "LIN - Local Interconnect Bus" MASTER'S THESIS CHALMERS UNIVERSITY OF TECHNOLOGY GOTEBORG, 2003, pages 19-30, XP002263433
- RUFF M: "Evolution of local interconnect network (LIN) solutions" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 octobre 2003 (2003-10-06), pages 3382-3389, XP010702546 ISBN: 0-7803-7954-3

## Description

### DOMAINE TECHNIQUE DE L'INVENTION.

La présente invention concerne un procédé et un dispositif de communication sur un réseau embarqué, notamment de véhicule automobile, compatible avec le standard LIN, afin d'optimiser la charge de ce réseau.

### ARRIERE PLAN TECHNOLOGIQUE DE L'INVENTION.

La mise en oeuvre d'un nombre toujours plus grand d'appareils électromécaniques dans les véhicules automobiles a conduit à multiplier les circuits électriques. Pour réduire la complexité croissante du câblage, des techniques de type « réseaux » ou « bus », déjà connues dans le domaine de l'informatique, ont été adaptées aux contraintes du monde de l'automobile.

Les fonctions essentielles du véhicules sont généralement réalisées « sous le capot » en faisant appel à un réseau temps réel à haut débit reliant à une unité de contrôle électronique (l'acronyme anglais ECU est le terme consacré pour Electronic Control Unit) les actuateurs et les capteurs du moteur, de la transmission, du système de freinage, de la suspension, du châssis etc... Un Réseau Local de Contrôleurs, ou CAN (acronyme anglais pour Controller Area Network), offrant un haut degré de sécurité et un débit de ordre de 1 Mbit/s est fréquemment utilisé pour ces fonctions.

Pour d'autres fonctions sécuritaires moins essentielles et les fonctions de confort, dites « fonctions habitacle », un Réseau Local d'Interconnexion, ou LIN (acronyme anglais pour Local Interconnect Network), a été développé par les constructeurs automobiles et des fabricants de semi-conducteurs.

Ce réseau secondaire à coût réduit est basé sur une interface UART/SCI qui est standard pour la plupart des microcontrôleurs. Il fonctionne avec le bus CAN et il est spécifiquement utilisé pour les applications telles que les miroirs électriques, les sièges électriques, la fermeture centralisée, les lève-vitres, les systèmes d'éclairage.

Depuis la version initiale 1.0 de 1999 jusqu'à la version 2.0 de 2003, les spécifications du réseau LIN ont connu plusieurs évolutions tendant à faciliter l'intégration d'un réseau et à l'amélioration des caractéristiques temps réel.

Tous les détails de ces spécifications sont bien connus de l'homme de métier, et seuls seront rappelés ci-après ceux nécessaires à la compréhension de l'invention.

L'échange d'information sur le réseau LIN est basé sur la présence d'une station maître et d'une ou plusieurs stations esclaves. La communication est toujours faite à l'initiative de la station maître qui envoie un en-tête de message comprenant un silence suivi d'un octet de synchronisation, et d'un octet d'identification ou identificateur.

Une station esclave ayant décodé un identificateur prédéterminé, transmet une trame de données en réponse comprenant deux, quatre ou huit octets de données et une somme de contrôle.

L'en-tête et la trame de données forme une trame de message.

Il est a noté que l'identificateur du message est représentatif du contenu du message, mais pas de sa destination.

Un identificateur IDF[7:0] est formé d'un identifiant ID[0:5] codé sur six bits et de deux bit de parité PO=ID0+ID1+ID2+ID4 (mod. 2) et P1=ID1+ID3+ID4+ID5 (mod. 2).

Il existe 64 identifiants différents, mais seuls les 60 premiers (de 00 à 3B, en représentation hexadécimale) correspondent à des trames de messages.

Les quatre derniers identifiants sont des identifiants spéciaux, notamment de trame de commande, de configuration et de diagnostics.

La table suivante établit la liste des identifiants et des identificateurs valides selon la révision 2.0 des spécifications du protocole LIN :

**Table I**

| Identifiant ID[0:5] | Identificateur IDF[7:0] | Type de trame |
|---|---|---|
| 00 à 3B | P1P0ID[5:0] | Trame de message |
| 3C | 3C | Trame de commande (requête de la station maître) |
| 3D | 7D | Trame de commande (réponse de la station esclave dans la trame) |
| 3E | FE | Trame étendue définie par l'utilisateur |
| 3F | BF | Trame de type étendu futur |

Au cours des évolutions du standard les caractéristiques principales du réseau LIN n'ont pas été fondamentalement modifiées, et son débit est toujours limité à 20 Kbit/s en raison de contraintes de compatibilité électromagnétique et de synchronisation d'horloge sans utilisation de quartz ou de résonateur céramique.

Or les « fonctions habitacles » se révèlent de plus en plus gourmandes en bande passante, notamment celles afférentes au système d'éclairage avancé de type AFS (Advanced/Adaptative Front Light System).

Les dispositifs d'éclairage directionnels de type DBL (acronyme anglais de Dynamic Bending Light), ou de réglage automatique du niveau des faisceaux des projecteurs en fonction de l'assiette du véhicule de la catégorie LVL (acronyme anglais de Levelling of Vehicule Light), reliés par le réseau au calculateur de bord dédié LCS (acronyme anglais de Light Control System), exigent des temps de réponse très brefs.

L'extension du réseau au pilotage de futures applications telles que les projecteurs multixénon, les ballasts, les leds accroîtra encore la charge du bus.

Une première solution pour absorber l'augmentation de charge du réseau serait d'augmenter le débit de celui-ci. Mais les avantages initiaux (faible coût faible perturbation) du réseau LIN seraient perdus.

Une seconde solution serait de changer de standard et de mettre en oeuvre des réseaux plus évolués tels que le CAN, mais là encore le coût serait pénalisant.

Un procédé faisant appel à une extension du protocole LIN est connue de la demande de brevet US 2003/0070019 A1. Ce procédé permet la transmission spontanée d'informations de la part de stations esclaves, au delà des transmissions normales au sein d'un cycle standardisé d'interrogations où de commandes par la station maître. Dans un espace temporel séparant la fin d'une trame-message du début de la suivante, une station esclave à l'opportunité de transmettre des informations sans avoir été adressée auparavant par la durée totale d'un cycle standard d'interrogations-réponses ou de commandes-réponses reste au mieux inchangé par rapport à la norme.

Il existe donc un besoin d'optimisation de la charge d'un réseau LIN afin de conserver ce standard économique pour l'ensemble des « fonctions habitacles », et particulièrement la gestion des systèmes d'éclairage évolués, présents et futurs, de type AFS.

### DESCRIPTION GENERALE DE L'INVENTION.

La présente invention vise donc un procédé de communication sur un réseau embarqué, notamment de véhicule automobile, entre une station maître et une pluralité de stations esclaves, du type de ceux compatibles avec le protocole standardisé de Réseau Local d'Interconnection (LIN).

Dans ces procédés, de manière connue, des trames de données sont émises par les stations esclaves sur un bus série en réponse à l'émission par la station maître d'identificateurs représentatifs du contenu requis de ces trames.

Le procédé selon l'invention est quant à lui remarquable en ce que la totalité ou une partie de chacune des trames de données spécifiques attachées à un même identificateur prédéterminé est formée séquentiellement par chacune des stations esclaves.

Selon un premier mode préféré de réalisation de l'invention, une série de trames de données spécifiques est émise par les stations esclaves en réponse à l'émission par la station maître d'une suite de plusieurs exemplaires de cet identificateur prédéterminé en nombre égal à celui des stations esclaves.

Fort avantageusement, chacune des stations esclaves émet également un bloc de fin de trame constitué d'une somme de contrôle calculée sur la série des trames de données spécifiques.

Avantageusement encore, un identificateur supplémentaire est émis par la station maître avant chaque émission de la suite de plusieurs exemplaires de l'identificateur prédéterminé.

On tire bénéfice du fait que cet identificateur prédéterminé est représentatif d'une trame avec réponse dans la trame, et aussi que l'identificateur supplémentaire est représentatif d'une requête de l'état des stations esclaves.

De préférence ces identificateurs prédéterminé et supplémentaire sont respectivement constitués des octets 7D et 3C en représentation hexadécimale.

Selon un second mode préféré de réalisation de l'invention, chacune desdites trames de données spécifiques est formée de plusieurs sous-trames de même longueur et en nombre égal au nombre des stations esclaves.

Dans ce second mode, la dernière des stations esclaves à émettre séquentiellement la dernière des sous-trames émet avantageusement consécutivement un bloc de fin de trame constitué de préférence d'une somme de contrôle calculée sur l'ensemble de ces sous-trames.

L'invention concerne aussi un dispositif de communication sur un réseau embarqué, notamment de véhicule automobile, remarquable en ce qu'il comporte des moyens de mise en oeuvre du procédé de communication décrit ci-dessus.

Un moyen de stockage d'information, caractérisé en ce qu'il mémorise un ou plusieurs programmes dont l'exécution autorise une mise en oeuvre du procédé de communication selon l'invention est également visé par la présente demande.

II en est de même d'un programme d'ordinateur sur un moyen de stockage d'information comportant une ou plusieurs séquences d'instructions exécutables par une unité de traitement d'information telle que microprocesseur, microcontrôleur, ordinateur et/ou machine d'état, l'exécution desdites séquences d'instructions autorisant une mise en oeuvre du procédé brièvement décrit ci-dessus.

Un véhicule, notamment automobile, remarquable en ce qu'il met en oeuvre un dispositif de communication, un moyen de stockage d'information, ou un programme d'ordinateur présentant respectivement les caractéristiques exposées ci-dessus est également l'objet de la présente invention.

Ces quelques spécifications essentielles auront rendu évidents pour l'homme de métier les avantages apportés par ce procédé de communication sur un réseau embarqué compatible avec le protocole LIN par rapport au standard.

Les spécifications détaillées du procédé, et d'un dispositif adapté à sa mise en oeuvre, sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre schématiquement une série de chronogrammes de trames de messages du protocole LIN standard.
La **Figure 2** montre schématiquement une série de chronogrammes de trames de commandes du protocole LIN standard.
La **Figure 3** montre schématiquement une série de chronogrammes de trames de commandes mise en oeuvre dans le procédé selon l'invention compatible avec le standard LIN.
La **Figure 4** montre schématiquement une série de chronogrammes de trames de messages mise en oeuvre dans le procédé selon l'invention compatible avec le standard LIN.
La **Figure 5** est une vue schématique d'un dispositif de pilotage d'un système d'éclairage directionnel et de réglage des projecteurs mettant en oeuvre le procédé selon l'invention.

### DESCRIPTION DES MODES DE REALISATION PREFERES DE L'INVENTION.

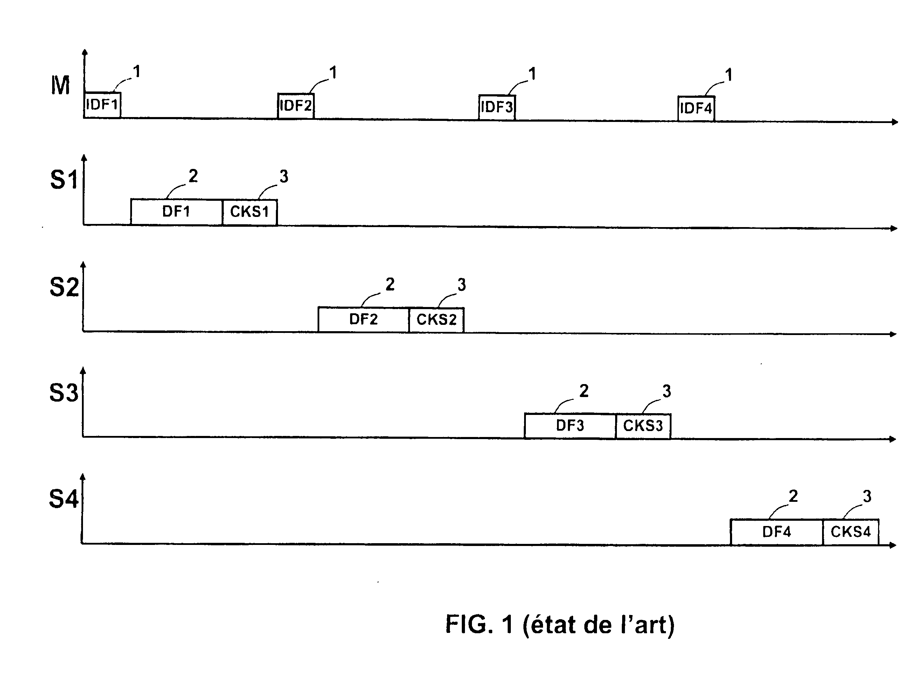

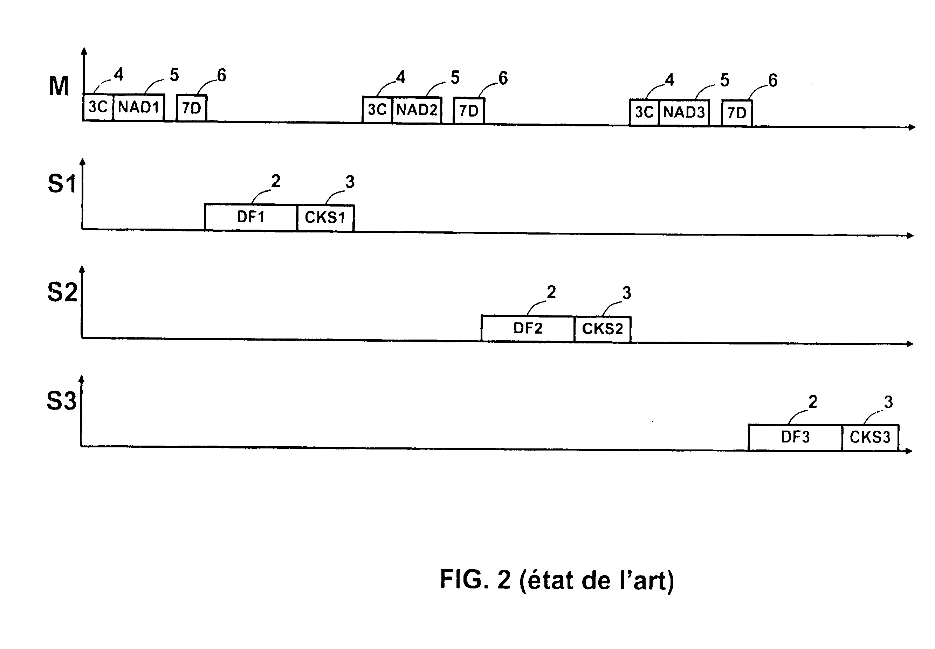

Afin de bien montrer les différences entre les chronogrammes d'échange de données selon le protocole mis en oeuvre par l'invention et les chronogrammes des trames de messages et de commandes du protocole LIN standard, des exemples de ces derniers ont été représentés, pour mémoire, sur les **Figures 1** **et** **2****,** respectivement.

Sur la **Figure 1****,** la trace de la station maître M montre que celle-ci émet sur le bus une suite d'identificateurs 1 de valeurs IDF1, IDF2, IDF3, IDF4 comprises entre 00 et 3B, correspondant à des trames de messages.

Cette émission est filtrée par quatre stations esclaves S1, S2, S3 et S4 qui écoutent en permanence le trafic sur le bus.

Quand l'une des quatre stations S1, S2, S3, S4 reconnaît un identificateur 1 auquel elle est programmée pour répondre, elle place sur le bus une trame de données 2 spécifique de valeur DF1, DF2, DF3 ou DF4 suivie par une somme de contrôle 3 de valeur CKS1, CKS2, CKS3 ou CKS4.

La station maître M de la **Figure 2** émet sur le bus une suite d'identificateurs 1 de valeurs 3C et 7D correspondant à des trames de commandes (Voir Table I).

L'identificateur 3C de requête 4 de la station maître M est suivi d'une trame de données 5 de valeur NAD1, NAD2, NAD3 ou NAD4 permettant à l'une des trois stations esclaves S1, S2 ou S3 à laquelle est destinée la commande de s'identifier. La station destinatrice transmet immédiatement une trame de données spécifique 3 de valeur DF1, DF2 ou DF3 quand elle décode l'identificateur 7D de déclenchement 6 correspondant.

Que ce soit au moyen de trames de messages (**Figure 1**) ou au moyen de trames de commandes (**Figure 2**), le protocole standard du réseau LIN impose d'utiliser une trame entière de données 2 d'une longueur de deux, quatre ou huit octets pour chaque lecture d'un état d'une station esclave.

Par exemple, dans le cas de trames de huit octets, le réseau LIN n'autorisant qu'une trame toutes les 10 ms au minimum, il en résulte que plus le réseau compte de stations esclaves S1, S2, S3, S4, plus la périodicité de lecture de leur état est importante quelque soit par ailleurs la longueur du mot d'état 2 à transmettre.

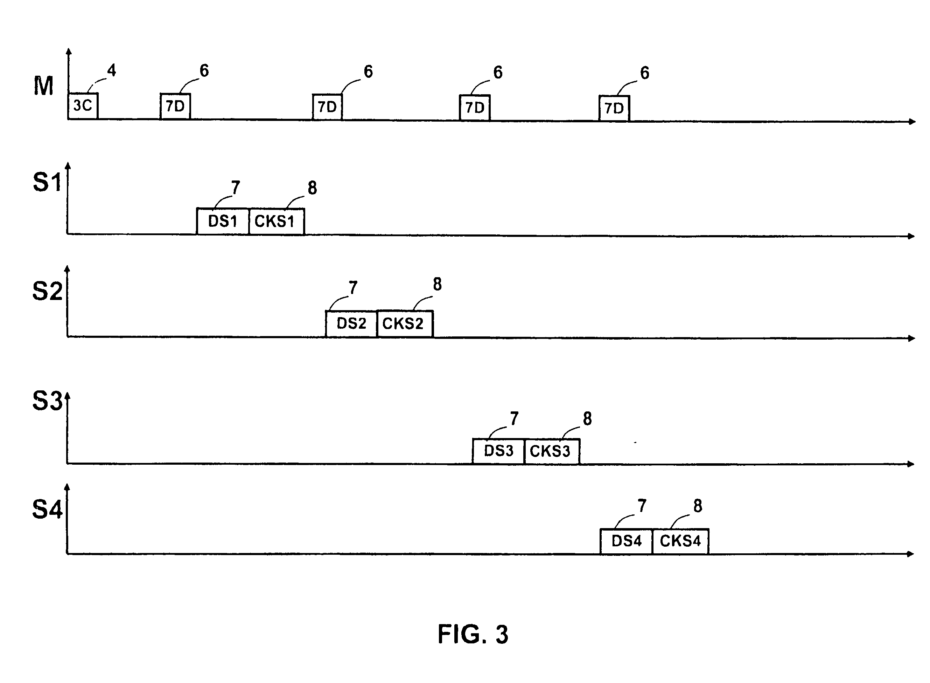

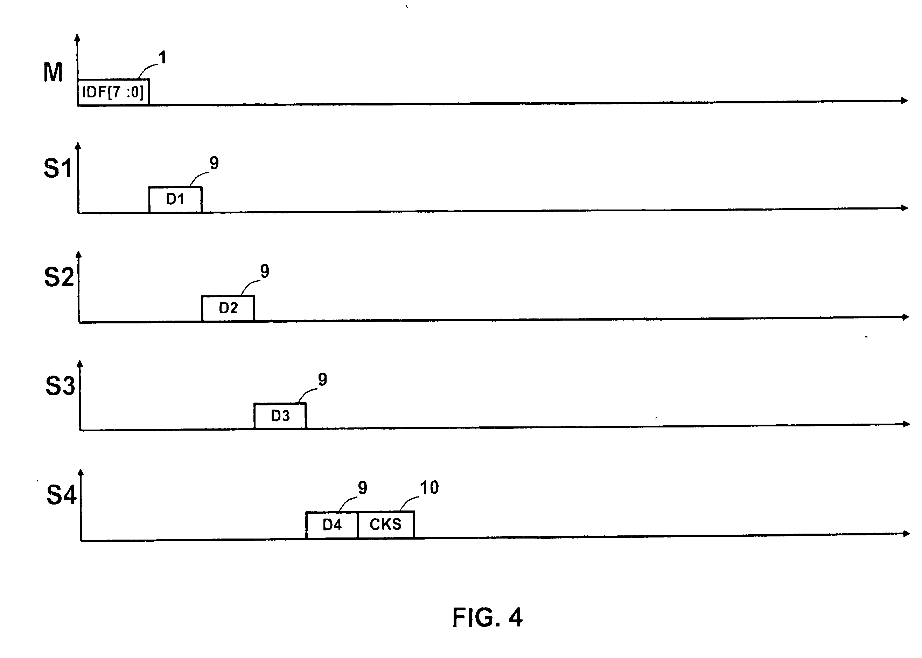

Comme la description générale de l'invention l'a déjà indiqué brièvement, le principe du procédé de communication illustré par les chronogrammes des **Figures 3** **et** **4**, consiste à partager une trame de données émise en réponse à un identificateur entre plusieurs stations esclaves.

Selon le premier mode de réalisation de l'invention, correspondant à la **Figure 3**, la station maître M émet un identificateur 4 de valeur 3C, c'est-à-dire une requête maître, à toutes les stations esclaves S1, S2, S3, S4.

Celles-ci répondent chacune leur tour dans la trame initiée par l'identificateur 4 de code 3C à la réception d'une suite d'identificateurs de déclenchement 6 de code 7D en plaçant en série sur le bus leurs trames de données spécifiques 7 de valeurs DS1, DS2, DS3 et DS4 suivies par des bloc de fin de trame 8 constitués de sommes de contrôle CKS1, CKS2, CKS3 et CKS4 respectives.

La comparaison des chronogrammes des **Figures 1** **et** **3** rend évidente la diminution de charge du bus procurée par le procédé selon l'invention. En effet, les mots d'état 7 des stations esclaves S1, S2, S3, et S4 émis dans une trame de commande sont avantageusement plus courts que le minimum de deux octets d'une trame de message ;
La même constatation s'impose en comparant les **Figures 2** **et** **3** . En effet, il n'y a pas de transmission de données d'identification 5 des stations sur le réseau.

Selon le second mode de réalisation de l'invention, correspondant à la **Figure 4**, le relevage de l'état des stations esclaves S1, S2, S3 ou S4 par la station maître M est réalisé par celle-ci en envoyant un identificateur 1 de code compris entre 00 et 3B, c'est-à-dire un identificateur 1 correspondant à une trame de message.

En réponse à cet identificateur 1, chacune des stations esclaves S1, S2, S3 et S4 émet chacune à son tour une sous-trame 9 de valeur D1, D2, D3 ou D4 afin de remplir la trame de données du message.

La dernière station esclave S4 complète la série de sous-trames émises 9 par une somme de contrôle 10 calculée sur l'ensemble de ces sous-trames 9.

L'avantage de ce second mode de réalisation de l'invention en terme de charge du bus par rapport au protocole LIN standard apparaît également clairement en comparant les chronogrammes de la **Figure 4** à ceux des **Figures 1** **et** **2**.
- transmission d'un même identificateur 1 de message pour plusieurs stations esclaves S1, S2, S3, S4;
- une seule trame de données pour les quatre stations esclaves au lieu d'une trame complète 2 par station ;
- une seule somme de contrôle 10.

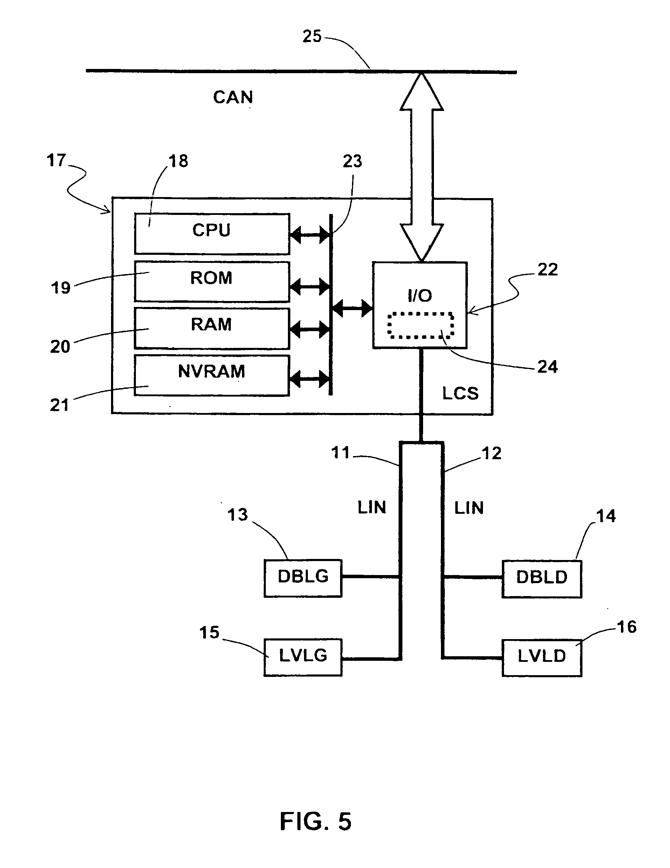

La mise en oeuvre du procédé de communication selon l'invention sur un réseau LIN 11, 12 utilisé pour piloter un système d'éclairage directionnel 13, 14 et de réglage des projecteurs 15, 16, tels que celui représenté schématiquement sur la **Figure 5**, se traduit par une nette amélioration du temps de réponse du système.

La station maître du réseau est un calculateur de bord dédié 17 constituant le système de contrôle de l'éclairage (LCS).

Ce calculateur 17 comprend de manière habituelle une unité centrale de traitement 18, de type microprocesseur, microcontrôleur ou analogue, une mémoire de programmes préenregistrée 19 de type ROM, une mémoire de travail 20 de type RAM, et de préférence une mémoire de stockage 21 non-volatile de type FLASH.

Ces éléments 18, 19, 20, 21 sont architecturés autour d'un bus interne 23 raccordé à un module d'interface 22 pour les échanges d'information I/O avec l'extérieur.

Le module d'interface 22 comprend un UART 24 apte à gérer le protocole de communication série des deux branches gauche et droite d'un réseau LIN 11, 12 sur lesquelles sont connectées quatre stations esclaves 13, 15, 14, 16 constituées respectivement, d'une part, par le système d'éclairage directionnel gauche DBLG et le système de réglage du projecteur gauche LVLG, et, d'autre part, par le système d'éclairage directionnel droit DBLD et le système de réglage du projecteur droit LVLD.

Ces stations esclaves 13,14,15,16 comportent de manière connue en soi des circuits d'interface LIN standard et des contrôleurs de réseau leur permettant de dialoguer sur le bus avec la station maître 17. Ces contrôleurs de réseau sont microprogrammés de façon à générer séquentiellement les trames 7 ou parties 9 de trames en réponse aux identificateurs 1, 4, 6 émis.

Les données de pilotage de ces systèmes 13, 14, 15, 16 dépendent de certains paramètres issus des fonctions « sous le capot », comme par exemple la vitesse du véhicule, ou son assiette; le module d'interface 22 est donc également relié au bus CAN 25 du véhicule.

Dans le cadre du protocole de réseau LIN standard, les actuateurs des systèmes DBLG, LVLG, DBLD, LVLD sont commandés ensemble par une trame de commande, et les capteurs d'états sont lus individuellement par une trame de message.

Une séquence de lecture/ écriture est typiquement la suivante:
a) commande des quatre stations esclaves DBLG, LVLG, DBLD, LVLD ;
b) lecture de DBLD ;
c) commande des quatre stations esclaves DBLG, LVLG, DBLD, LVLD ;
d) lecture DBLG ;
e) commande des quatre stations esclaves DBLG, LVLG, DBLD, LVLD ;
f) lecture LVLD ;
g) commande des quatre stations esclaves DBLG, LVLG, DBLD, LVLD ;
h) lecture LVLG.

Comme on l'a déjà rappelé, le réseau LIN n'autorise qu'une trame toutes les 10 ms au minimum, ce qui génère un délai de 80 ms entre deux lectures consécutives de l'état d'une station esclave donnée. Un tel délai n'est pas négligeable quand la contrainte portant sur le temps de réponse du système est de l'ordre de 40 ms à 100 ms, et qu'un mode dégradé doit être détecté et signalé en moins de 3s.

En mettant en oeuvre le premier mode de réalisation du procédé de communication selon l'invention, un exemple de séquence de pilotage des systèmes AFS 13, 14, 15, 16 est typiquement le suivant :
a) commande des quatre stations esclaves DBLG, LVLG, DBLD, LVLD ;
b) émission de la commande de lecture d'état (3C) ;
c) commande des quatre stations esclaves DBLG, LVLG, DBLD, LVLD ;
d) lecture des quatre stations esclaves DBLG, LVLG, DBLD, LVLD ;

La durée d'un cycle de pilotage est alors ramenée à 70 ms.

L'utilisation du second mode de réalisation du procédé de communication selon l'invention conduit à une réduction supplémentaire de la durée du cycle. Dans ce cas, un exemple de séquence de pilotage des systèmes AFS 13, 14, 15, 16 est typiquement le suivant :
a) commande des quatre stations esclaves DBLG, LVLG, DBLD, LVLD ;
b) lecture des quatre stations esclaves DBLG, LVLG, DBLD, LVLD ;

La durée d'un cycle de pilotage est alors seulement de 20 ms.

De manière connue en soi, les séquences d'instructions permettant de réaliser les séquences ou cycles de pilotage ci-dessus sont stockées de préférence dans la ROM 19 du calculateur LCS 17.

Il s'agit préférentiellement d'instructions machine, mais de manière équivalente, il peut s'agir de séquences d'un langage de commande interprétées par la CPU 18 au moment de leur exécution.

La mise oeuvre du procédé de communication exposé ci-dessus au moyen d'un dispositif microprogrammé, ou même d'une logique câblée de type ASIC, ne sortirait pas non plus du cadre de l'invention.

L'homme de métier aura compris, au vu de ce qui précède, qu'un véhicule, notamment un véhicule automobile, équipé du dispositif de communication, du moyen de stockage d'information et du programme d'ordinateur précédemment décrits, bénéficie à moindre coût d'une architecture de réseau embarqué susceptible d'accueillir les systèmes électroniques de sécurité et de confort les plus évolués, et donc présente un avantage concurrentiel évident.

Comme il va de soi l'invention ne se limite pas aux deux seuls modes d'exécution préférentiels décrits ci-dessus.

Elle embrasse au contraire toutes les autres variantes possibles de réalisation, compatibles avec le standard LIN et ses développements futurs, dans la mesure où elles résulteraient des revendications ci-après.

## Revendications

1. Procédé de communication sur un réseau embarqué (11,12) de véhicule automobile, entre une station maître (M) et une pluralité de stations esclaves (S1,S2,S3,S4), du type de ceux compatibles avec le protocole standardisé de Réseau Local d'Interconnection (LIN) dans lesquels des trames de données (2) sont émises par lesdites stations esclaves (S1,S2,S3,S4) sur un bus série (11,12) en réponse à l'émission par ladite station maître (M) d'identificateurs (1,4,6) représentatifs du contenu requis desdites trames (2), **caractérisé en ce que** la totalité (7) ou une partie (9) de chacune des trames de données (2) spécifiques attachées à un même identificateur prédéterminé (1,4,6) est formée séquentiellement par chacune desdites stations esclaves (S1,S2,S3,S4).

2. Procédé de communication sur un réseau embarqué (11,12) selon la revendication 1, **caractérisé en ce qu'**une série desdites trames de données spécifiques (7) est émise par lesdites stations esclaves (S1,S2,S3,S4) en réponse à l'émission par ladite station maître (M) d'une suite de plusieurs exemplaires dudit identificateur prédéterminé (6) en nombre égal à celui desdites stations esclaves (S1,S2,S3,S4).

3. Procédé de communication sur un réseau embarqué (11,12) selon la revendication 2, **caractérisé en ce que** chacune desdites stations esclaves (S4) émet également un bloc de fin de trame (8) constitué de préférence d'une somme de contrôle calculée sur ladite série desdites trames de données spécifiques (7).

4. Procédé de communication sur un réseau embarqué (11,12) selon la revendication 3, **caractérisé en ce qu'**un identificateur supplémentaire (4) est émis par ladite station maître (M) avant chaque émission de ladite suite de plusieurs exemplaires dudit identificateur prédéterminé (6).

5. Procédé de communication sur un réseau embarqué (11,12) selon la revendication 4, **caractérisé en ce que** ledit identificateur prédéterminé (6) est représentatif d'une trame avec réponse dans la trame.

6. Procédé de communication sur un réseau embarqué (11,12) selon la revendication 5, **caractérisé en ce que** ledit identificateur supplémentaire (4) est représentatif d'une requête de l'état desdites stations esclaves (S1,S2,S3,S4).

7. Procédé de communication sur un réseau embarqué (11,12) selon la revendication 6, **caractérisé en ce que** ledit identificateur prédéterminé (6) et ledit identificateur supplémentaire (4) sont respectivement constitués des octets 7D et 3C en représentation hexadécimale.

8. Procédé de communication sur un réseau embarqué (11,12) selon la revendication 1, **caractérisé en ce que** chacune desdites trames de données spécifiques est formée de plusieurs sous-trames (9).

9. Procédé de communication sur un réseau embarqué selon la revendication 8, **caractérisé en ce que** la dernière desdites stations esclaves (S4) à émettre séquentiellement la dernière desdites sous-trames (9) émet consécutivement un bloc de fin de trame (10), constitué de préférence d'une somme de contrôle calculée sur l'ensemble desdites sous-trames (9).

10. Dispositif de communication (17,13,14,15,16) sur un réseau embarqué (11,12) de véhicule automobile, **caractérisé en ce qu'**il comporte une station maître (M) et une pluralité de stations esclaves (S1, S2, S3, S4) comprenant des moyens pour échanger des informations selon toutes les étapes d'un procédé conforme à l'une quelconque des revendications 1 à 9 précédentes.

11. Moyen de stockage d'information (19,20,21), **caractérisé en ce qu'**il mémorise un ou plusieurs programmes dont l'exécution met en oeuvre toutes les étapes d'un procédé selon l'une quelconque des revendications 1 à 9 précédentes.

12. Programme d'ordinateur sur un moyen de stockage d'information (19,20,21), comportant une ou plusieurs séquences d'instructions exécutables par une unité de traitement d'information telle que microprocesseur, microcontrôleur, ordinateur (18) et/ou machine d'état, l'exécution desdites séquences d'instructions mettant en oeuvre toutes les étapes d'un procédé selon l'une quelconque des revendications 1 à 9 précédentes.

13. Véhicule automobile, **caractérisé en ce qu'**il comporte un dispositif de communication (17,13,14,15,16), un moyen de stockage d'information (19,20,21), ou un programme d'ordinateur selon respectivement l'une des revendications 10 à 12 précédentes.

## Patentansprüche

1. Verfahren zur Kommunikation über ein bordeigenes Netz (11, 12) eines Kraftfahrzeugs zwischen einer Master-Station (M) und einer Vielzahl von Slave-Stationen (S1, S2, S3, S4) von der Art, die mit dem standardisierten LIN-Protokoll (Local Interconnect Network) kompatibel sind, bei denen Datenrahmen (2) von den Slave-Stationen (S1, S2, S3, S4) über einen seriellen Bus (11, 12) übertragen werden als Antwort darauf, dass durch die Master-Station (M) Identifier (1, 4, 6) übertragen werden, die für den erforderlichen Inhalt der Rahmen (2) repräsentativ sind, **dadurch gekennzeichnet, dass** die Gesamtheit (7) oder ein Teil (9) eines jeden mit ein und demselben vorbestimmten Identifier (1, 4, 6) verbundenen spezifischen Datenrahmens (2) durch jede Slave-Station (S1, S2, S3, S4) sequenziell gebildet wird.

2. Verfahren zur Kommunikation über ein bordeigenes Netz (11, 12) nach Anspruch 1,
**dadurch gekennzeichnet, dass** eine Reihe dieser spezifischen Datenrahmen (7) durch die Slave-Stationen (S1, S2, S3, S4) übertragen wird als Antwort darauf, dass durch die Master-Station (M) eine Folge mehrerer Exemplare des vorbestimmten Identifiers (6) in gleicher Zahl wie die der Slave-Stationen (S1, S2, S3, S4) übertragen wird.

3. Verfahren zur Kommunikation über ein bordeigenes Netz (11, 12) nach Anspruch 2,
**dadurch gekennzeichnet, dass** jede der Slave-Stationen (S4) auch einen Rahmenendblock (8) überträgt, der vorzugsweise aus einer über die Reihe der spezifischen Datenrahmen (7) berechneten Prüfsumme gebildet ist.

4. Verfahren zur Kommunikation über ein bordeigenes Netz (11, 12) nach Anspruch 3,
**dadurch gekennzeichnet, dass** durch die Master-Station (M) vor jeder Übertragung der Folge mehrerer Exemplare des vorbestimmten Identifiers (6) ein zusätzlicher Identifier (4) übertragen wird.

5. Verfahren zur Kommunikation über ein bordeigenes Netz (11, 12) nach Anspruch 4,
**dadurch gekennzeichnet, dass** der vorbestimmte Identifier (6) für einen Rahmen mit einer Antwort in dem Rahmen repräsentativ ist.

6. Verfahren zur Kommunikation über ein bordeigenes Netz (11, 12) nach Anspruch 5,
**dadurch gekennzeichnet, dass** der zusätzliche Identifier (4) für eine Abfrage nach dem Status der Slave-Stationen (S1, S2, S3, S4) repräsentativ ist.

7. Verfahren zur Kommunikation über ein bordeigenes Netz (11, 12) nach Anspruch 6,
**dadurch gekennzeichnet, dass** der vorbestimmte Identifier (6) und der zusätzliche Identifier (4) von den Bytes 7D bzw. 3C in Hexadezimaldarstellung gebildet sind.

8. Verfahren zur Kommunikation über ein bordeigenes Netz (11, 12) nach Anspruch 1,
**dadurch gekennzeichnet, dass** jeder der spezifischen Datenrahmen von mehreren Unterrahmen (9) gebildet ist.

9. Verfahren zur Kommunikation über ein bordeigenes Netz nach Anspruch 8,
**dadurch gekennzeichnet, dass** die letzte der Slave-Stationen (S4), die sequenziell den letzten Unterrahmen (9) sendet, in Folge einen Rahmenendblock (10) überträgt, der vorzugsweise aus einer über die gesamten Unterrahmen (9) berechneten Prüfsumme gebildet ist.

10. Vorrichtung (17, 13, 14, 15, 16) zur Kommunikation über ein bordeigenes Netz (11, 12) eines Kraftfahrzeugs,
**dadurch gekennzeichnet, dass** sie eine Master-Station (M) und eine Vielzahl von Slave-Stationen (S1, S2, S3, S4) umfasst, die Mittel zum Austausch von Informationen gemäß allen Schritten eines Verfahrens nach einem der vorhergehenden Ansprüche 1 bis 9 aufweisen.

11. Informationsspeichermittel (19, 20, 21),
**dadurch gekennzeichnet, dass** es ein oder mehrere Programme speichert, deren Ausführung alle Schritte eines Verfahrens nach einem der vorhergehenden Ansprüche 1 bis 9 implementiert.

12. Computerprogramm auf einem Informationsspeichermittel (19, 20, 21) mit einer oder mehreren Befehlssequenzen, die durch eine Datenverarbeitungseinheit, zum Beispiel einen Mikroprozessor, Mikrocontroller, Computer (18) und/oder eine Zustandsmaschine, ausführbar sind, wobei die Ausführung dieser Befehlssequenzen alle Schritte eines Verfahrens nach einem der vorhergehenden Ansprüche 1 bis 9 implementiert.

13. Kraftfahrzeug,
**dadurch gekennzeichnet, dass** es eine Kommunikationsvorrichtung (17, 13, 14, 15, 16), ein Informationsspeichermittel (19, 20, 21) oder ein Computerprogramm nach jeweils einem der vorhergehenden Ansprüche 10 bis 12 umfasst.

## Claims

1. Method for communication on an on-board network (11, 12) of a motor vehicle, between a master station (M) and a plurality of slave stations (S1, S2, S3, S4), of the type compatible with the standardised Local Interconnection Network (LIN) protocol, wherein data frames (2) are emitted by the said slave stations (S1, S2, S3, S4) on a serial bus (11, 12) in response to the emission by the said master station (M) of identifiers (1,4,6) which are representative of the required content of the said frames (2), **characterised in that** all (7) or part (9) of each of the specific data frames (2) attached to a single predetermined identifier (1,4,6) is formed sequentially by each of the said slave stations (S1, S2, S3, S4).

2. Method for communication on an on-board network (11, 12) according to claim 1, **characterised in that** a series of the said specific data frames (7) is emitted by the said slave stations (S1, S2, S3, S4) in response to the emission by the said master station (M) of a sequence of several examples of the said predetermined identifier (6), of a number equal to that of the said slave stations (S1, S2, S3, S4).

3. Method for communication on an on-board network (11, 12) according to claim 2, **characterised in that** each of the said slave stations (S4) also emits an end-of-frame block (8) which preferably consists of a checksum calculated on the said series of the said specific data frames (7).

4. Method for communication on an on-board network (11, 12) according to claim 3, **characterised in that** an additional identifier (4) is emitted by the said master station (M) before each emission of the said sequence of several examples of the said predetermined identifier (6).

5. Method for communication on an on-board network (11, 12) according to claim 4, **characterised in that** the said predetermined identifier (6) is representative of a frame with response in the frame.

6. Method for communication on an on-board network (11, 12) according to claim 5, **characterised in that** the said additional identifier (4) is representative of a request for the state of the said slave stations (S1, S2, S3, S4).

7. Method for communication on an on-board network (11, 12) according to claim 6, **characterised in that** the said predetermined identifier (6) and the said additional identifier (4) consist respectively of the bytes 7D and 3C in hexadecimal representation.

8. Method for communication on an on-board network (11, 12) according to claim 1, **characterised in that** each of the said specific data frames is formed by a plurality of sub-frames (9).

9. Method for communication on an on-board network according to claim 8, **characterised in that** the last one of the said slaves stations (S4) which emits sequentially the last one of the said sub-frames (9) emits consecutively an end-of-frame block (10), preferably consisting of a checksum calculated on the assembly of the said sub-frames (9).

10. Device (17, 13, 14, 15, 16) for communication on an on-board network (11, 12) of a motor vehicle, **characterised in that** it comprises a master station (M) and a plurality of slave stations (S1, S2, S3, S4) comprising means for exchanging data according to all the steps of a method according to any one of the preceding claims 1 to 9.

11. Data storage means (19, 20, 21), **characterised in that** it stores one or a plurality of programmes, the execution of which implements all the steps of a method according to any one of the preceding claims 1 to 9.

12. Computer programme on a data storage means (19, 20, 21), comprising one or a plurality of sequences of instructions which can be executed by a data processing unit such as a microprocessor, microcontroller, computer (18) and/or state machine, with the execution of the said sequences of instructions implementing all the steps of a method according to any one of the preceding claims 1 to 9.

13. Motor vehicle, **characterised in that** it comprises a communication device (17, 13, 14, 15, 16), a data storage means (19, 20, 21), or a computer programme according respectively to one of the preceding claims 10 to 12.
